# EUROPEAN PATENT SPECIFICATION

(11) **EP 3 139 075 B1**
(45) Date of publication and mention of the grant of the patent: **24.06.2020**
(21) Application number: 15782686.8
(22) Date of filing: 21.04.2015
(51) Int. Cl.: F16L 11/133, B32B 1/08, B32B 5/22, B32B 25/04, B32B 25/16

(54) **MARINE HOSE MANUFACTURING METHOD AND MARINE HOSE**
MARINESCHLAUCHHERSTELLUNGSVERFAHREN UND MARINESCHLAUCH
PROCÉDÉ DE FABRICATION DE TUYAU SOUPLE MARIN ET TUYAU SOUPLE MARIN

(30) Priority: 25.04.2014 JP 2014090950
(43) Date of publication of application: 08.03.2017
(73) Proprietor: The Yokohama Rubber Co., Ltd., Tokyo 105-8685 (JP)
(72) Inventor: MORITA, Tomohiro, Hiratsuka-shi Kanagawa 254-8601 (JP)
(74) Representative: Dilg, Haeusler, Schindelmann Patentanwaltsgesellschaft mbH
(86) International application number: PCT/JP2015/062069
(87) International publication number: WO 2015/163308

(56) References cited:
- EP-A1- 0 533 388
- JP-A- S6 090 737
- JP-A- 2006 283 788
- JP-A- 2009 119 656
- JP-A- 2012 052 616
- JP-A- 2012 057 716

## Description

### Technical Field

The present invention relates to a method of manufacturing a marine hose and a marine hose, and particularly relates to a method of manufacturing a marine hose that includes a sponge layer and has good appearance, and a marine hose that includes a sponge layer and has good appearance.

### Background Art

Conventional marine hoses (floating type and submarine type marine hoses) are typically formed by vulcanizing a base hose with a closed cell sponge, such as a natural rubber sponge or a polyethylene sponge, wrapped around the outside of the base hose (for example, see Patent Document 1).

However, the heat during vulcanization causes the sponge in the marine hose to shrink. This results in a wrinkled appearance of the formed marine hose. Patent Document 1 describes a marine hose that includes a sponge layer and a foam rubber layer. However, this hose too can suffer from a wrinkled appearance.

Patent Document 2 discloses a plastics cabinet liner, for example for a refrigerator appliance, molded from a thermoformable composite. The plastics cabinet liner comprises (a) core layer which comprises high impact polystyrene and/or acryolnitrile-butadiene-styrene copolymer, (b) a gloss patina on a first, or exterior surface of the core layer; and (c) a barrier layer on the second, or interior, surface of the core layer.

Patent Document 3 discloses a method of manufacturing a hose for conveying fluid capable of easily pulling out a mandrel after being vulcanized, and preventing an inner surface rubber layer from being released from a connection metal fitting. Thereby, the mandrel is inserted into a nipple, and a vulcanized or semi-vulcanized rubber sheet is wound so as to stride the nipple and the mandrel. After that, a hose body is formed by winding a component such as the inner surface rubber layer or the like to the outside of them and the mandrel is pulled out after the hose body is vulcanized.

Patent Document 4 discloses a method for lining an inner surface of a steel tube with an expanded covering layer. Thereby, a covering material formed by housing a curved resilient metal thin plate in the inside of a heat-expansible tubular material is inserted into the steel tube and expanded by heating. The curled resilient metal thin plate is housed on the inside of a heat-expansible tubular part made of polyethylene mixed with a blowing agent to form a covering material. The covering material is inserted into an aperture in a steel tube to be lined for its inside and heated to cause the tubular part to expand, and the tubular part is pressed on the inner surface of the steel tube by the metal thin plate to closely bond the tubular part to the inner surface of the steel tube for covering. The metal thin plate is then pulled out of the steel tube.

Patent Document 5 discloses a method for manufacturing a fluid conveying hose, which can form a taper shape of a buoyancy layer at the end of a hose body. Thereby, a strip material of sponge rubber for forming the buoyancy layer is wound and multilayered so that the wound ends of the strip material are shifted between layers in a longitudinal direction of the hose to shape steps. A non-vulcanized foamed rubber is wound around on the steps of the strip material, and thereafter covered with a cover rubber layer.

Patent Document 6 discloses a method of manufacturing a hose for fluid conveyance by which a hose for fluid conveyance having a wire reinforced layer without void is easily manufactured. The method of manufacturing a hose for fluid conveyance comprises (a) covering the outer circumference of an inner reinforced layer with a first unvulcanized rubber layer; subsequently (b) forming a wire reinforcing layer; (c) covering the wire reinforcing layer and the first unvulcanized rubber layer with a second unvulcanized layer; subsequently (d) performing the covering with a cover rubber layer; and subsequently (e) performing a vulcanization.

### Citation List

### Patent Literature

Patent Document 1: JP 2006-283788A
Patent Document 2: EP 0533 388 A1
Patent Document 3: JP 2009 119656 A
Patent Document 4: JP S60 90737 A
Patent Document 5: JP 2012 052616 A
Patent Document 6: JP 2012 057716 A

### Summary of Invention

### Technical Problem

An object of the present invention is to provide a method of manufacturing a marine hose that includes a sponge layer and has good appearance and a marine hose that includes a sponge layer and has good appearance.

### Solution to Problem

To achieve the object described above, a method of manufacturing a marine hose, which includes at least a base hose, a sponge layer, a foam rubber layer, and a cover rubber layer, comprises the steps of:
wrapping a sponge layer A around the outside of the base hose;
wrapping a foam rubber layer B around the outside of the sponge layer A, the foam rubber layer B containing an unvulcanized foam rubber composition;
wrapping a cover rubber layer around the outside of the foam rubber layer B; and
vulcanizing the wrapped assembly; wherein
the foam rubber composition includes
a rubber component containing as a main component at least one selected from the group consisting of natural rubber, styrene butadiene rubber, chloroprene rubber, ethylene propylene rubber, ethylene propylene diene rubber, and reclaimed rubber;
and, per 100 parts by mass of the rubber component, from 1.1 to 50 parts by mass of a blowing agent and from 1.1 to 50 parts by mass of a blowing aid; and a blow ratio of the foam rubber composition after vulcanization is 1.1 or greater.

### Advantageous Effects of Invention

The method of manufacturing a marine hose of the present invention includes wrapping the foam rubber layer B, which contains a specific foam rubber composition, around the outside of the sponge layer A. Upon vulcanization, this foam rubber composition expands, offsetting the thermal shrinkage of the sponge layer A. As a result, wrinkles are prevented from forming on the outer surface of the marine hose.

The foam rubber layer C, which contains an unvulcanized foam rubber composition, can be wrapped around the outside of the base hose prior to the sponge layer A being wrapped. Additionally, the sponge layer D, another sponge layer, can be wrapped around the outside of the sponge layer A prior to the foam rubber layer B being wrapped. Such a configuration can provide the marine hose with even better appearance.

The blowing agent is preferably at least one selected from the group consisting of an azo compound, a nitroso compound, a sulfonyl hydrazide compound, an azide compound, and an inorganic blowing agent.

A marine hose manufactured by the method of manufacturing described above is capable of preventing wrinkles forming on the outside of the marine hose and have good appearance.

### Brief Description of Drawings

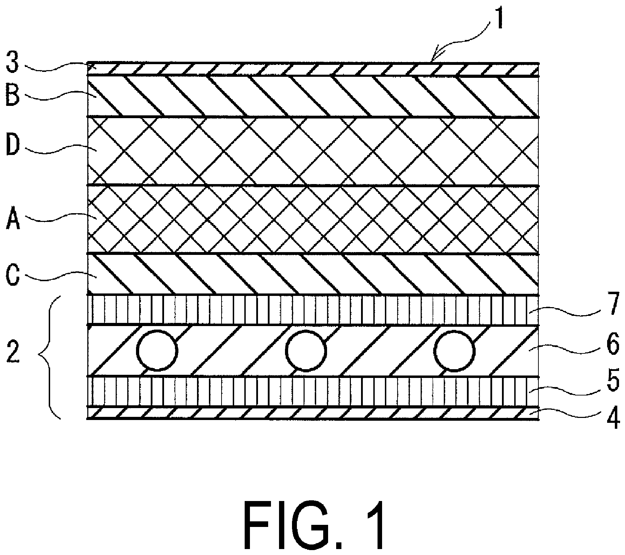

FIG. 1 is a schematic cross-sectional view of a portion that exemplifies an embodiment of a marine hose of the present invention.

### Description of the Embodiments

Hereinafter, a method of manufacturing a marine hose according to the present invention will be described on the basis of an embodiment that is illustrated in the drawing.

FIG. 1 is a schematic cross-sectional view of a portion of a marine hose body, which is an example of an embodiment of the structure of the marine hose manufactured by the method of manufacturing of the present invention.

In FIG. 1, a marine hose 1, along a cross section thereof, includes a base hose 2, a sponge layer A, D, a foam rubber layer B, C, and a cover rubber layer 3. In the example of FIG. 1, the foam rubber layer C, the sponge layer A, the sponge layer D, and the foam rubber layer B are disposed outward of the base hose 2 in that order. However, the structure of the marine hose 1 is not limited to the structure of the example illustrated in the drawing. The marine hose 1 is only required to have a configuration including at least one sponge layer A disposed outward of the base hose 2, the foam rubber layer B disposed outward of the sponge layer A, and the cover rubber layer 3 disposed outward of the foam rubber layer B. For example, the foam rubber layer C may be disposed between the base hose 2 and the sponge layer A, forming a configuration of the base hose 2, the foam rubber layer C, the sponge layer A, the foam rubber layer B, and the cover rubber layer 3. Additionally, the sponge layer D may be disposed between the sponge layer A and the foam rubber layer B, forming a configuration of the base hose 2, the sponge layer A, the sponge layer D, the foam rubber layer B, and the cover rubber layer 3.

The base hose 2 may have a structure in common with those typically used in marine hoses. Such a structure is exemplified by a hose including, from the inner side, a tube rubber layer 4, a reinforcing layer 5, a wire reinforcing layer 6, and a reinforcing layer 7. The cover rubber layer 3 is a layer for protecting the outer surface of the marine hose. A cover rubber layer typically used in marine hoses can be applied.

The sponge layers A, D can be made of sponge typically used in marine hoses. Examples of such include natural rubber sponges, polyethylene sponges, urethane sponges, and synthetic rubber sponges. Natural rubber sponges and polyethylene sponges are preferable. When a marine hose comprising a natural rubber sponge is vulcanized, the natural rubber sponge can adhere to the base hose without requiring the use of an adhesive.

In the present invention, the sponge layers A, D may be either closed cell or open cell. A closed cell sponge is preferable. Closed cell sponge layers A, D provide buoyancy of the marine hose while also allowing a sufficient level of strength to be maintained.

The method of manufacturing of the present invention includes wrapping the sponge layer A around the outside of the base hose 2, wrapping the foam rubber layer B, which contains an unvulcanized foam rubber composition, around the outside of the sponge layer A, wrapping the cover rubber layer 3 around the outside of the foam rubber layer B, and vulcanizing the wrapped assembly. By virtue of this configuration, when the sponge layer A undergoes thermal shrinkage during vulcanization, the foam rubber composition concurrently vulcanizes and expands. As a result, the amount of thermal shrinkage that the sponge layer A undergoes is offset and wrinkles can be prevented from forming on the outer surface of the marine hose 1.

Additionally, the foam rubber layer C, which contains an unvulcanized foam rubber composition, can be wrapped around the outside of the base hose 2 prior to the sponge layer A being wrapped. Additionally, the sponge layer D, another sponge layer, can be wrapped around the outside of the sponge layer A prior to the foam rubber layer B being wrapped. Such a configuration can provide the marine hose 1 with even better appearance.

The blow ratio of the foam rubber composition upon vulcanization of the marine hose must be 1.1 or greater. The blow ratio is preferably from 1.5 to 30, and more preferably from 1.5 to 15. A blow ratio of less than 1.1 results in the thermal shrinkage of the sponge layers A, D being unable to be sufficiently offset and wrinkles forming on the outer surface of the marine hose. On the other hand, an excessively large blow ratio results in the foam rubber layers B, C having insufficient strength. Note that in the present specification, the blow ratio is found by measuring the density of the foam rubber composition before and after expansion and taking the ratio of the two (density before expansion/density after expansion).

In the method of manufacturing of the present invention, the foam rubber composition that makes up the foam rubber layers B, C may be the same composition or different, with the proviso that the composition is one of those described below. Typically, to increase productivity, use of the same composition is preferable.

The foam rubber composition that makes up the foam rubber layers B, C contains a rubber component containing, as a main component, at least one selected from the group consisting of natural rubber, styrene butadiene rubber, chloroprene rubber, ethylene propylene rubber, ethylene propylene diene rubber, and reclaimed rubber; and, per 100 parts by mass of the rubber component, from 1.1 to 50 parts by mass of a blowing agent, and from 1.1 to 50 parts by mass of a blowing aid.

The rubber component of the foam rubber composition contains, as a main component, at least one selected from the group consisting of natural rubber, styrene butadiene rubber, chloroprene rubber, ethylene propylene rubber, ethylene propylene diene rubber, and reclaimed rubber. Here, "main component" means that at least one rubber selected from the group consisting of natural rubber, styrene butadiene rubber, chloroprene rubber, ethylene propylene rubber, ethylene propylene diene rubber, and reclaimed rubber has a total content of 50 wt.% or greater with respect to the 100 wt.% rubber component. The total content of rubber selected from natural rubber, styrene butadiene rubber, and reclaimed rubber is preferably 50 wt.% or greater. Here, reclaimed rubber should be understood as containing carbon black and other such fillers and compounding agents as well as rubber components. Thus, the content of the reclaimed rubber should be determined by the actual amount of the rubber components contained in the reclaimed rubber. Note that the reclaimed rubber is preferably made of natural rubber.

The foam rubber composition contains from 1.1 to 50 parts by mass, and preferably from 1.1 to 20 parts by mass of the blowing agent per 100 parts by mass of the rubber component. A foam rubber composition containing less than 1.1 parts by mass of the blowing agent expands insufficiently upon vulcanization and results in the blow ratio being unable to be made high enough to enable the thermal shrinkage of the sponge layer to be sufficiently offset. On the other hand, a foam rubber composition containing more than 50 parts by mass of the blowing agent has increased cost without an increase in the blow ratio.

Examples of the blowing agent include a chemical blowing agent and an inorganic blowing agent. Examples of the chemical blowing agent include an azo compound, a nitroso compound, a sulfonyl hydrazide compound, an azide compound, and a carbon diamide compound. Of these, an azo compound is preferable. One of these chemical blowing agents may be used individually or two or more may be used together.

Examples of the nitroso compound include N,N'-dinitroso-pentamethylene tetramine (DPT), and N,N'-dimethyl-N,N'-dinitroso-terephthalamide. Examples of the azo compound include azobisisobutyronitrile (AZBN), azobiscyclohexylnitrile, and azodiaminobenzene, bariumazodicarboxylate. Examples of the carbon diamide compound include azodicarbonamide (ADCA). Examples of the sulfonyl hydrazide compound include benzenesulfonylhydrazide (BSH), 4,4'-oxybis(benzenesulfonylhydrazide)(OBSH), toluenesulfonylhydrazide (TSH), and diphenylsulfone-3,3'-disulfonylhydrazide. Examples of the azide compound include calciumazide, 4,4'-diphenyldisulfonylazide, and p-toluenesulfonylazide.

A decomposition temperature of the chemical blowing agent is preferably from 120 to 200°C and more preferably from 130 to 170°C. A chemical blowing agent with a decomposition temperature within this range facilitates chemical blowing and vulcanization control. In the present specification, the decomposition temperature of the chemical blowing agent is a temperature determined by measuring decomposition heat and weight decrease using a heat analysis method selected from differential scanning calorimetry (DSC) and thermogravimetry (TGA).

Examples of the inorganic blowing agent include carbon dioxide, air, nitrogen, water, ammonia, sodium hydrogen carbonate, anhydrous sodium nitrate, sodium bicarbonate, sodium carbonate, ammonium bicarbonate, ammonium carbonate, and ammonium nitrite. Carbon dioxide, carbon monoxide, nitrogen, air, and ammonia are preferable. One of these inorganic blowing agents may be used individually or two or more may be used together.

The foam rubber composition contains from 1.1 to 50 parts by mass, and preferably from 1.1 to 20 parts by mass of the blowing aid per 100 parts by mass of the rubber component. A foam rubber composition containing less than 1.1 parts by mass of the blowing aid expands insufficiently upon vulcanization and results in the blow ratio being unable to be made high enough. On the other hand, a foam rubber composition containing more than 50 parts by mass of the blowing aid has increased cost without an increase in the blow ratio.

Examples of the blowing aid include a urea blowing aid, a salicylic acid blowing aid, a benzoic acid blowing aid, and a metal oxide (such as zinc oxide). A urea blowing aid and a metal oxide are preferable. The blowing aid used is dependent upon the blowing agent used. For example, when azodicarbonamide (ADCA) is used as the blowing agent, urea can be used as the blowing aid. One of these blowing aids may be used individually or two or more may be used together.

In the method of manufacturing of the present invention, a ratio (Ta/Tb) between the thickness (Ta) of the sponge layer A and the thickness (Tb) of the unvulcanized foam rubber composition sheet prior to vulcanizing the foam rubber layer B is preferably from 1.5 to 300, and more preferably from 5 to 100. A thickness ratio (Ta/Tb) greater than 300 results in the thermal shrinkage of the sponge layer being unable to be sufficiently offset and wrinkles forming on the outer surface of the marine hose.

The present invention is further described below using examples. However, the scope of the present invention is not limited to these examples. Examples

Nine marine hoses (Working Examples 1 to 7, Comparative Examples 1 to 2) were manufactured according to the different foam rubber compositions shown in Table 1. Each of the marine hoses was manufactured by wrapping the sponge layer A around the outside of the base hose, wrapping the sponge layer D around the outside of the sponge layer A, wrapping an unvulcanized foam rubber composition sheet around the outside of the sponge layer D, wrapping the cover rubber layer around the outside of the unvulcanized foam rubber composition sheet, and wrapping fabric around this wrapped assembly. Then this wrapped assembly was vulcanized at 127°C for 210 minutes.

Note that the sponge layers A, D were each constituted by a 60 mm-thick polyethylene sponge wrapped around a single time. The unvulcanized foam rubber composition sheet of predetermined thickness was wrapped around the outside of the sponge layer D a single time. In Working Examples 1 to 6 and Comparative Examples 1 to 2, the thickness (Ta) of the sponge layer A was 60 mm, the thickness (Tb) of the unvulcanized foam rubber composition sheet was 4 mm, and the thickness ratio thereof (Ta/Tb) was 15. In Working Example 7, the thickness (Ta) of the sponge layer A was 60 mm, the thickness (Tb) of the unvulcanized foam rubber composition sheet was 0.194 mm, and the thickness ratio thereof (Ta/Tb) was 310.

Whether or not the obtained marine hoses had a wrinkled appearance is shown in Table 1. Blow ratio was determined by finding the ratio of the density of the unvulcanized foam rubber composition sheet to the density of the foam rubber layer B, which was found by taking out the foam rubber layer B from the marine hose and measuring its density. The obtained blow ratios are shown in Table 1.

**[TABLE 1-I]**

| | | Working Example 1 | Working Example 2 | Working Example 3 | Working Example 4 | Working Example 5 |
|---|---|---|---|---|---|---|
| NR | Part by mass | 70 | 70 | 70 | 50 | 100 |
| SBR | Part by mass | 30 | 30 | 30 | 50 | |
| Reclaimed rubber | Part by mass | | | | | |
| Carbon black | Part by mass | 10 | 10 | 10 | 10 | 10 |
| Calcium carbonate | Part by mass | 60 | 60 | 60 | 60 | 60 |
| Zinc oxide | Part by mass | 5 | 5 | 5 | 5 | 5 |
| Stearic acid | Part by mass | 2 | 2 | 2 | 2 | 2 |
| Wax | Part by mass | 5 | 5 | 5 | 5 | 5 |
| Aroma oil | Part by mass | 15 | 15 | 15 | 15 | 15 |
| Sulfur | Part by mass | 3 | 3 | 3 | 3 | 3 |
| Vulcanization accelerator | Part by mass | 1 | 1 | 1 | 1 | 1 |
| Blowing agent | Part by mass | 5 | 3 | 7 | 5 | 7 |
| Blowing aid | Part by mass | 5 | 3 | 7 | 5 | 7 |
| Blow ratio | - | 1.5 | 1.4 | 1.8 | 1.8 | 1.8 |
| Thickness ratio (Ta/Tb) | - | 15 | 15 | 15 | 15 | 15 |
| Appearance (presence of wrinkles) | - | No | No | No | No | No |

**[TABLE 1-II]**

| | | Working Example 6 | Comparative Example 1 | Comparative Example 2 | Working Example 7 |
|---|---|---|---|---|---|
| NR | Part by mass | 50 | 70 | 70 | 70 |
| SBR | Part by mass | | 30 | 30 | 30 |
| Reclaimed rubber | Part by mass | 100 | | | |
| Carbon black | Part by mass | 10 | 10 | 10 | 10 |
| Calcium carbonate | Part by mass | 60 | 60 | 60 | 60 |
| Zinc oxide | Part by mass | 5 | 5 | 5 | 5 |
| Stearic acid | Part by mass | 2 | 2 | 2 | 2 |
| Wax | Part by mass | 5 | 5 | 5 | 5 |
| Aroma oil | Part by mass | 15 | 15 | 15 | 15 |
| Sulfur | Part by mass | 3 | 3 | 3 | 3 |
| Vulcanization accelerator | Part by mass | 1 | 1 | 1 | 1 |
| Blowing agent | Part by mass | 5 | 0 | 1 | 3 |
| Blowing aid | Part by mass | 5 | 0 | 1 | 3 |
| Blow ratio | - | 1.9 | 1.0 | 1.0 | 1.4 |
| Thickness ratio (Ta/Tb) | - | 15 | 15 | 15 | 310 |
| Appearance (presence of wrinkles) | - | No | Yes | Yes | Some |

The raw materials used as per Table 1 are described below.
NR (natural rubber): STR-20
SBR: styrene butadiene rubber, Asaprene 303 manufactured by Japan Elastomer Co., Ltd., non-oil extended product
Reclaimed rubber: reclaimed rubber of 50 wt.% rubber component content, Muraoka Rubber Reclaiming Co., Ltd.
Carbon black: HTC #100 manufactured by NSCC Carbon Co., Ltd.
Calcium carbonate: calcium carbonate manufactured by Maruo Calcium Co., Ltd.
Zinc oxide: Zinc Oxide #3 manufactured by Seido Chemical Industry Co., Ltd.
Stearic acid: stearic acid YR manufactured by NOF CORPORATION
Wax: SUNTIGHT R manufactured by Seiko Chemical Co.,Ltd.
Aroma oil: A-OMIX manufactured by Sankyo Yuka Kogyo K.K.
Sulfur: Oil Treated Sulfur, manufactured by Hosoi Chemical Industry Co., Ltd.
Vulcanization accelerator: Nocceler DM manufactured by Ouchi Shinko Chemical Industrial Co., Ltd.
Blowing agent: VINYFOR-AC-3 manufactured by EIWA CHEMICAL IND. CO. LTD.
Blowing aid: CELLPASTE-M3 manufactured by EIWA CHEMICAL IND. CO. LTD.

The marine hoses obtained by the method of manufacturing of Working Examples 1 to 7 had no wrinkles on the outer surface thereof and had good appearance.

In the method of manufacturing of Comparative Example 1, a blowing agent and a blowing aid were not added to the foam rubber composition. Thus upon vulcanization, expansion did not take place and wrinkles formed on the outer surface of the marine hose. In the method of manufacturing of Comparative Example 2, a blowing agent and the blowing aid were added to the foam rubber composition at an amount of less than 1.1 parts by mass. Thus upon vulcanization, expansion did not take place and wrinkles formed on the outer surface of the marine hose.

### Reference Signs List

- 1: Marine hose
- 2: Base hose
- 3: Cover rubber layer
- 4: Tube rubber layer
- 5,: 7 Reinforcing layer
- 6: Wire reinforcing layer
- A, D: Sponge layer
- B, C: Foam rubber layer

## Claims

1. A method of manufacturing a marine hose that includes at least a base hose, a sponge layer, a foam rubber layer, and a cover rubber layer, the method comprising the steps of:
wrapping a sponge layer (A) around the outside of the base hose;
wrapping a foam rubber layer (B) around the outside of the sponge layer (A), the foam rubber layer (B) containing an unvulcanized foam rubber composition;
wrapping a cover rubber layer around the outside of the foam rubber layer (B); and
vulcanizing the wrapped assembly; wherein
the foam rubber composition includes
a rubber component containing as a main component at least one selected from the group consisting of natural rubber, styrene butadiene rubber, chloroprene rubber, ethylene propylene rubber, ethylene propylene diene rubber, and reclaimed rubber;
and, per 100 parts by mass of the rubber component, from 1.1 to 50 parts by mass of a blowing agent and from 1.1 to 50 parts by mass of a blowing aid; and a blow ratio of the foam rubber composition after vulcanization is 1.1 or greater.

2. The method of manufacturing a marine hose according to claim 1, further comprising
wrapping a foam rubber layer (C) around the outside of the base hose prior to wrapping the sponge layer (A), the foam rubber layer (C) containing an unvulcanized foam rubber composition.

3. The method of manufacturing a marine hose according to claim 1 or 2, further comprising
wrapping another sponge layer (B) around the outside of the sponge layer (A) prior to wrapping the foam rubber layer (B).

4. The method of manufacturing a marine hose according to any one of claims 1 to 3, wherein
the blowing agent is at least one selected from the group consisting of an azo compound, a nitroso compound, a sulfonyl hydrazide compound, an azide compound, and an inorganic blowing agent.

5. A marine hose manufactured by the method of manufacturing a marine hose according to any one of claims 1 to 4.

## Patentansprüche

1. Verfahren zur Herstellung eines Marineschlauchs, der mindestens einen Grundschlauch, eine Schwammschicht, eine Schaumgummischicht und eine Deckgummischicht umfasst, wobei das Verfahren folgende Schritte umfasst:
Wickeln einer Schwammschicht (A) um die Außenseite des Basisschlauchs;
Wickeln einer Schaumgummischicht (B) um die Außenseite der Schwammschicht (A), wobei die Schaumgummischicht (B) eine nicht vulkanisierte Schaumkautschukzusammensetzung enthält;
Wickeln einer Deckgummischicht um die Außenseite der Schaumgummischicht (B); und
Vulkanisieren der gewickelten Anordnung; wobei die Schaumkautschukzusammensetzung einen Kautschukbestandteil einschließt, der als Hauptbestandteil mindestens einen Bestandteil enthält, die ausgewählt ist aus der Gruppe bestehend aus Naturkautschuk, Styrol-Butadien-Kautschuk, ChloroprenKautschuk, Ethylen-Propylen-Kautschuk, Ethylen-Propylen-Dien-Kautschuk und regeneriertem Kautschuk;
und pro 100 Masseteile des Kautschukbestandteils von 1,1 bis 50 Masseteile eines Treibmittels und von 1,1 bis 50 Masseteile eines Treibhilfsmittels; und wobei ein Treibmittelverhältnis der Schaumkautschukzusammensetzung nach dem Vulkanisieren 1,1 oder größer ist.

2. Verfahren zur Herstellung eines Marineschlauchs nach Anspruch 1, ferner umfassend
Wickeln einer Schaumgummischicht (C) um die Außenseite des Grundschlauchs vor dem Wickeln der Schwammschicht (A), wobei die Schaumgummischicht (C) eine nicht vulkanisierte Schaumkautschukzusammensetzung enthält.

3. Verfahren zur Herstellung eines Marineschlauchs nach Anspruch 1 oder 2, ferner umfassend
Wickeln einer weiteren Schwammschicht (B) um die Außenseite der Schwammschicht (A) vor dem Wickeln der Schaumgummischicht (B).

4. Verfahren zur Herstellung eines Marineschlauchs nach einem der Ansprüche 1 bis 3, wobei
das Treibmittel mindestens eins ist, das aus der Gruppe ausgewählt ist, die aus einer Azoverbindung, einer Nitrosoverbindung, einer Sulfonylhydrazidverbindung, einer Azidverbindung und einem anorganischen Treibmittel besteht.

5. Marineschlauch, hergestellt durch das Verfahren zur Herstellung eines Marineschlauchs nach einem der Ansprüche 1 bis 4.

## Revendications

1. Procédé de fabrication d'un tuyau souple marin qui inclut au moins un tuyau souple de base, une couche d'éponge, une couche de caoutchouc mousse et une couche de caoutchouc de couverture, le procédé comprenant les étapes consistant à :
envelopper une couche d'éponge (A) autour de l'extérieur du tuyau souple de base ;
envelopper une couche de caoutchouc mousse (B) autour de l'extérieur de la couche d'éponge (A), la couche de caoutchouc mousse (B) contenant une composition de caoutchouc mousse non vulcanisée ;
envelopper une couche de caoutchouc de couverture autour de l'extérieur de la couche de caoutchouc mousse (B) ; et
vulcaniser l'ensemble enveloppé ;
dans lequel la composition de caoutchouc mousse inclut un composant de caoutchouc contenant à titre de composant principal au moins un choisi dans le groupe constitué de caoutchouc naturel, caoutchouc butadiène-styrène, caoutchouc chloroprène, caoutchouc éthylène-propylène, caoutchouc diénique éthylène-propylène et caoutchouc régénéré ;
et, pour 100 parties en masse du composant de caoutchouc, de 1,1 à 50 parties en masse d'un agent de gonflement et de 1,1 à 50 parties en masse d'un auxiliaire de gonflement ; et un rapport de gonflement de la composition de caoutchouc mousse après vulcanisation est de 1,1 ou plus.

2. Procédé de fabrication d'un tuyau souple marin selon la revendication 1, comprenant en outre
l'enveloppement d'une couche de caoutchouc mousse (C) autour de l'extérieur du tuyau souple de base avant enveloppement de la couche d'éponge (A), la couche de caoutchouc mousse (C) contenant une composition de caoutchouc mousse non vulcanisée.

3. Procédé de fabrication d'un tuyau souple marin selon la revendication 1 ou 2, comprenant en outre
l'enveloppement d'une autre couche d'éponge (B) autour de l'extérieur de la couche d'éponge (A) avant enveloppement de la couche de caoutchouc mousse (B).

4. Procédé de fabrication d'un tuyau souple marin selon l'une quelconque des revendications 1 à 3, dans lequel
l'agent de gonflement est au moins l'un choisi parmi le groupe constitué d'un composé azo, d'un composé nitroso, d'un composé sulfonyl-hydrazide, d'un composé azide et d'un agent de gonflement inorganique.

5. Tuyau souple marin fabriqué par le procédé de fabrication d'un tuyau souple marin selon l'une quelconque des revendications 1 à 4.
